# EUROPEAN PATENT SPECIFICATION

(11) **EP 2 062 144 B1**
(45) Date of publication and mention of the grant of the patent: **09.10.2013**
(21) Application number: 07793884.3
(22) Date of filing: 07.09.2007
(51) Int. Cl.: G06F 12/08

(54) **ARRANGEMENT WITH INSTRUCTION CACHE**
ANORDNUNG MIT ANWEISUNGS-CACHE
DISPOSITIF PRÉSENTANT UNE ANTÉMÉMOIRE D'INSTRUCTIONS

(30) Priority: 14.09.2006 EP 06118710
(43) Date of publication of application: 27.05.2009
(73) Proprietor: Dialog Semiconductor B.V., 5215 MV 's-Hertogenbosch (NL)
(72) Inventor: WOLTERS, Gerardus Antonius Maria, NL-5384 XG Heesch (NL)
(74) Representative: Nederlandsch Octrooibureau
(86) International application number: PCT/NL2007/050440
(87) International publication number: WO 2008/033020

(56) References cited:
- US-A- 5 701 435
- US-A1- 2004 205 299
- SMITH A J: "CACHE MEMORIES" ACM TRANSACTIONS ON DATABASE SYSTEMS, ACM, NEW YORK, NY, US, vol. 14, no. 3, 1 September 1982 (1982-09-01), pages 473-530, XP000284855 ISSN: 0362-5915

## Description

### Field of the invention

The present invention relates to the field of an arrangement with an instruction cache.

### Background of the invention

Cache memory is nowadays widely used in all kinds of computer arrangements in order to improve access times for the processor of the computer arrangement to data stored in memory.

The cache memory is used to temporally store data from an other memory, e.g., Read Only Memory (ROM) that itself has a rather slow data access whereas the cache has a much faster data access. Several methods of cache memory management are known from the prior art to improve the speed of data access.

One of the most widely used memory managements include the following steps. The processor, upon having to read data (that includes both instructions and data like parameter values) from memory, first searches in the cache to look for the address indicated to store the required data. Now two things may happen, i.e., a hit or a miss. If a cache hit occurs the data is found in the cache and the data is transferred from the cache to the processor where it is processed. However, if a cache miss occurs the processor instructs the other memory to send the required data to the processor for further processing. If memory space is available in the cache such data from the other memory may be stored in the cache for (future) use by the processor.

However, since data access to the other memory is inherently slower than to the cache it takes rather long time for the processor to receive the required data.

US-A-5 701 435 discloses an instruction cache system for implementing programs having non-sequential instructions. The instructions are pre-fetched and returned in cache based upon an analysis of instructions which are in the cache pending execution. Fetched instructions are examined by a pre-fetch processor to determine the likelihood of a cache miss by the computer during sequential execution of the pre-fetched instructions. Also, explicit instructions may be inserted in the program to indicate a pre-fetch. By anticipating that future references to instructions may not be sequential, polluting of the instruction cache with non-used instructions is avoided by interrupting the sequential pre-fetching of program instructions. Once the branch instruction is executed, and the processing unit correctly identifies and references the target instruction from memory, pre-fetching may once again commence in the sequential manner until further branch instructions are encountered.

"Cache memories" by Smith A.J., ACM Transactions on database systems, ACM, New York, NY, US, vol. 14, no. 3, 1982, pp. 473-530, discloses cache memories used in medium and high-speed CPUs. The only line to be considered for pre-fetch is the immediately sequential one ("one block look-ahead"). If line i is referenced, only line i+1 is considered for pre-fetching. There are several possibilities for when to initiate a pre-fetch. For example, always, meaning that on every memory reference access to line i implies a pre-fetch access for line i+1.

### Summary of the invention

The object of the invention is to provide a method of and an arrangement for improved cache memory management that avoids cache misses to a great extent even though only a small cache is used.

To that end, the invention provides a method of executing a program by a processor, including retrieving blocks of data from at least one of a cache and a memory by the processor and after the processor has executed a jump instruction of the program which identifies a specific address in the cache to retrieve a first block of data from:
- looking in the cache whether the first block of data is stored in the cache;
- if the first block of data is identified to be present in the cache, retrieving the first block of data from the cache to be executed by the processor and immediately starting a pre-fetch action including reading at least a second block of data from the memory, the second block of data being stored in the memory on a memory address in the memory associated with a next instruction to be executed by the processor in accordance with the program;
- if the first block of data is identified not to be present in the cache, starting a fetch operation to read the first block of data from the memory to be executed by the processor.

In an embodiment, the invention relates to a computer arrangement comprising a processor, a cache connected to the processor and a memory connected to the cache, the computer arrangement being arranged to:
- to look in the cache whether the first block of data is stored in the cache;
- if the first block of data is identified to be present in the cache, to retrieve the first block of data from the cache to be executed by the processor and to immediately start a pre-fetch action including reading at least a second block of data from the memory, the second block of data being stored in the memory on a memory address in the memory associated with a next instruction to be executed by the processor in accordance with the program;
- if the first block of data is identified not to be present in the cache, to start a fetch operation to read the first block of data from the memory to be executed by the processor.

In a further embodiment, the invention relates to a computer program product comprising instructions and data allowing a computer arrangement with a processor, a cache connected to said processor and a memory connected to said cache, to perform the method as defined above.

Moreover, the invention relates to a data carrier comprising such a computer program product.

### Brief description of the drawings

The invention will be explained in detail with reference to some drawings that are only intended to show embodiments of the invention and not to limit the scope. The scope of the invention is defined in the annexed claims. The drawings show:
Figure 1 a schematic overview of a processor with a cache memory and an other memory;
Figure 2 shows a timing diagram of cache reading and memory reading in accordance with a prior art method;
Figures 3a and 3b show timing diagrams of cache reading and memory reading in accordance with the invention.

### Detailed description of embodiments

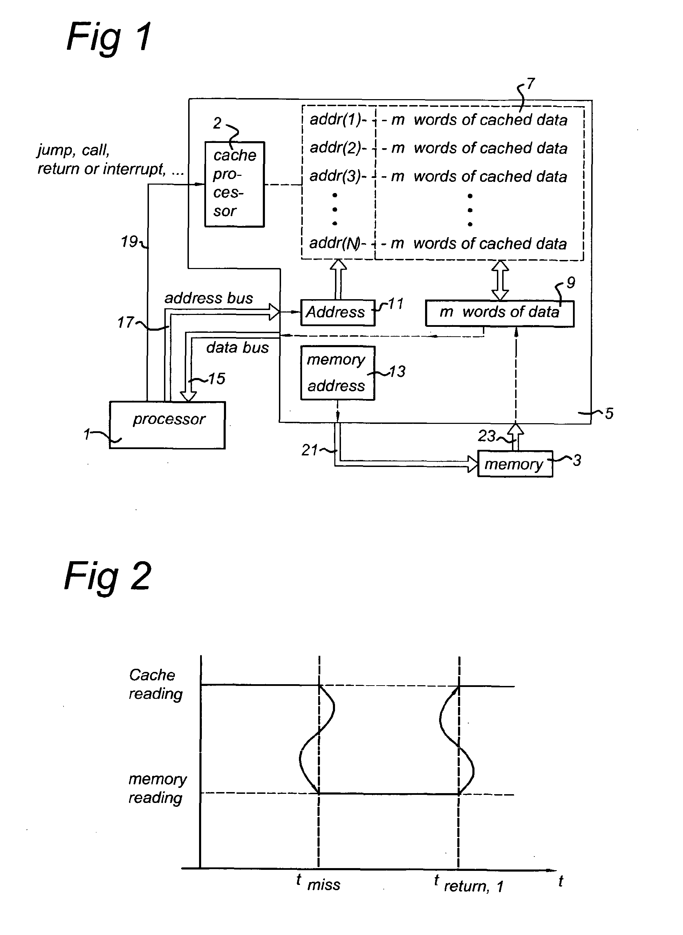

Figure 1 shows a processor 1 that is connected to a cache memory 5 (below "cache") by means of a data bus 15 and an address bus 17. Moreover, the processor 1 is connected to a cache processor 2 via a control line 19. The cache processor 2 controls the operation of the cache 5 as is known to persons skilled in the art. An other memory 3 is connected to the cache 5 by means of a data bus 23 and by means of an address bus 21.

The cache 5 is shown to have cache memory addresses addr(1), ..., addr(N). Each address relates to a memory space 7 where m words of data can be stored (referred to as "cached data"). In accordance with the invention, the cache 5 is an "instruction cache", i.e., the addresses store consecutive instructions with associated data. The instructions relate to a computer program whereas the data are associated with the instructions concerned. Each address may store several instructions. E.g., an address line may be 8 or 16 words wide. In one address line of, e.g., 8 words 5 of these 8 words may be instructions whereas the other 3 words may comprise parameter values.

Via the address bus 17 processor 1 can specify to cache 5 from which address it wishes to retrieve data. This is indicated with reference number 11. The address 11 is used by the cache 5 to look-up whether the indicated address is present in cache 5.

Data in the form of m consecutive words can be written into or read from cache 5, as indicated with reference number 9. If the cache 5 has found a specified address to be available in cache 5, a "cache hit" occurs and the data from that address is transferred to the processor 1 for further processing.

Data can also be transferred from memory 3 to cache 5 via data bus 23. The address in memory 3, as indicated by reference number 13, where the data should be read from is specified via address bus 21.

Memory 3 can include one or more portions of Read Only Memory (ROM), Electrically Erasable Read Only Memory (EPROM), Random Access Memory (RAM), Dynamic Random Access Memory (DRAM), or combinations thereof. Other currently known memory types, like SDRAM, or memory types to be developed in the future are not to be excluded by these examples. The ROM type of memories are typically an order of magnitude slower as to data access than cache. The RAM type memories like SDRAM typically have fast burst data access but show a longer data access time for a first member of the burst.

In most situations, the data throughput (m consecutive words) from memory 3 to cache 5 is the same as data throughput from cache 5 to processor 1.

ROM may be read based on a clock time Tₘₑₘ. The processor 1 may fetch instructions/data based on a clock time T_{proc} which is k times faster than Tₘₑₘ. Then, the ROM has to be read k words wide per ROM clock cycle Tₘₑₘ where the processor 1 fetches instructions/data from ROM one word wide per processor clock cycle T_{proc}.

In an embodiment, where burst type memory 3 is used, the memory clock cycle Tₘₑₘ may be the same as the processor clock cycle T_{proc.}

Figure 2 shows a prior art method of reading data from both cache 5 and memory 3. Processor 1 while processing a computer program has to read instructions and data on a regular basis. First, processor 1 will try to read those instructions/data from cache 5 since cache 5 has the fastest memory access. Figure 2 indicates that until time tₘᵢₛₛ the processor 1 retrieves the required instructions/data from cache 5. At tₘᵢₛₛ the cache reading fails, i.e., the address as specified by processor 1 cannot be found in cache 5. This is known in the art as "cache miss". Consecutive instructions of one and the same program will normally be stored at consecutive memory locations. As long as the program as running on processor 1 follows these consecutive instructions and as long as these consecutive instructions have been stored in cache 5, no such cache miss will occur. However, a next instruction to be executed by processor 1 may not be present in cache 5 if, e.g., cache 5 is small and has not yet stored the required next instruction or when the program contains a jump instruction requiring the processor to continue its processing with an instruction not stored on a next address but several addresses away not yet stored in cache 5. Such a jump instruction may be caused by a jump instruction with a specified new address, by a call instruction, a return instruction, an interrupt instruction requiring the program to jump to a sub-routine, etc. Such jumps may be based on a condition to be met such that it is unpredictable when the condition is met.

After a cache miss, processor 1 reads the required data from memory 3. Memory 3 reading occurs between tₘᵢₛₛ and t_{return, 1}, where the latter indicates the time that memory 3 transfers the requested instructions/data to processor 1. After t_{return, 1} processor 1 is able to read next instructions/data from cache 5 again.

If cache memory space is available after having received instructions/data from memory 3, those received instructions/data can be stored in cache 3 for future use.

As is evident from figure 2, it takes time, i.e. between tₘᵢₛₛ and t_{return,1}, before the instructions/data are available from memory 3 to processor 1. Of course, such time delays can be minimized by increasing the cache size and pre-storing as much instructions/data as possible from memory 3 into cache 5, possibly even a complete program. However, this may be an unsuitable and expensive solution in many occasions. Therefore, the invention provides a proposal for cache memory management to avoid such time delays as much as possible even in cases where a program contains more instructions/data than can be stored in cache 5.

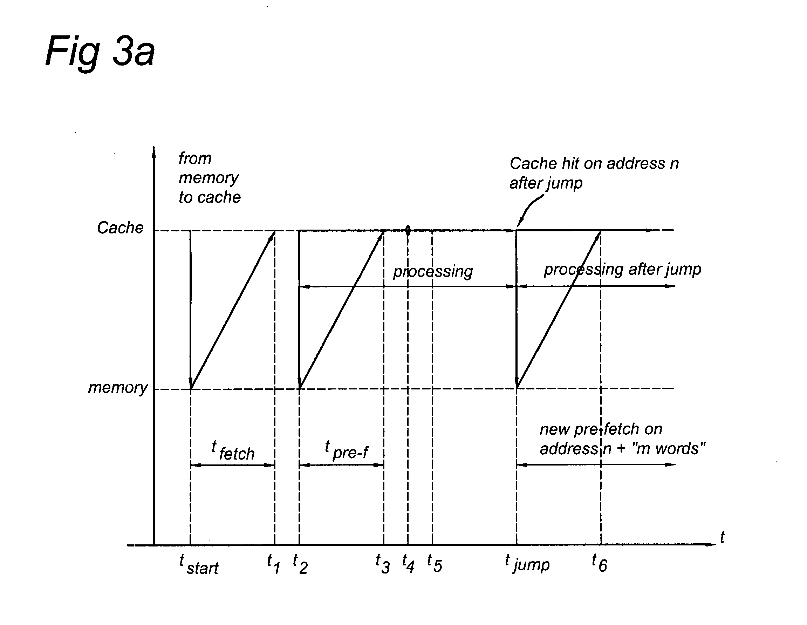

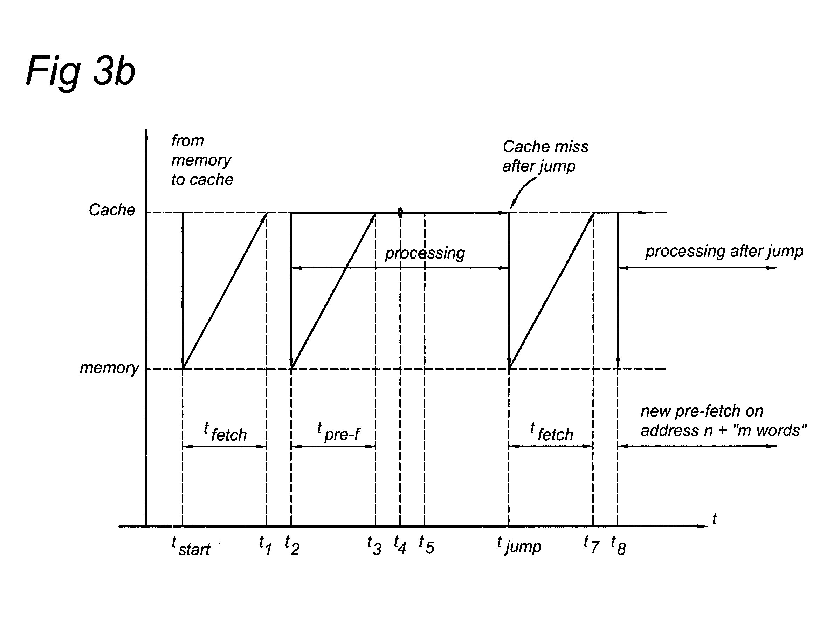

Figures 3a and 3b show examples in accordance with the present invention.

These figures show operations carried out in cache 5 and in memory 3. In the embodiment shown, at tₛₜₐᵣₜ processor 1 starts execution of a program. Processor 1 knows that the first set of instructions from a specified address has to be read from memory 3. It takes until t1 before the required first instructions/data are available from this memory address. This time period is indicated with t_{fetch}. Upon receipt, the first instructions/data are stored in cache 5. A short time after t1, i.e., at t2, a first cache hit occurs, i.e., processor 1 finds the first instructions/data in cache 5. Directly upon finding these first instructions/data in cache 5 at t2, the processor 1 instructs cache 5 to fetch second instructions/data as stored in memory 3 at a next memory address, i.e., at a memory address following the address that stores the first instructions/data. Again it takes a predetermined time period until the requested second instructions/data become available from memory 3. This time period is indicated with t_{pre-f}, indicating a time required for this pre-fetch operation. After t_{pre-f}, i.e. at time t3, cache 5 receives the requested second instructions/data from memory 3. These second instructions/data are also stored in cache 5.

After t3, more instructions/data may be retrieved from memory 3 and stored in cache 5, all relating to the program running on processor 1. To that end, cache 5 may have assigned a predetermined portion of its memory space 7 to that program.

As may be the case, the assigned memory space 7 for this program may not be large enough to store all instructions/data of this program.

Parallel to this pre-fetch operation the processor 1 processes the instructions/data as retrieved from cache 5 at t2. This first processing period may take longer than the pre-fetch operation time t_{pre-f}. This first processing is indicated to last until t4. Thus, when processor 1 again tries to retrieve instructions/data from cache 5 at t4, i.e., at the end of the first processing period, a next set of instructions/data is already available in cache 5. In most situations, executing a program means executing consecutive instructions stored at consecutive memory locations where consecutive addresses in memory store a plurality of instructions/data. So, after the first processing period, most probably processor 1 will need the set of instructions/data already stored in cache 5 as fetched from memory 3 during the first processing period.

At t5, thus, a second cache hit occurs and processor 1 can directly continue with executing instructions/data retrieved from cache 5 in a second processing period and does not have to wait for instructions/data to be read from memory 3.

After t5, processing by processor 1 can continue in the same way as explained with reference to times t4 and t5, as long as the instructions/data necessary for running the program on processor 1 are available in cache 5.

Figure 3a indicates that, at time tⱼᵤₘₚ, the processor 1 executes an instruction causing processor 1 to perform a jump to an instruction that is stored at an address already in cache 5. Such a jump may be caused by a jump instruction with a specified new address, by a call instruction, a return instruction, an interrupt instruction requiring the program to jump to a sub-routine, etc. For the sake of simplicity, here such instructions will all be referred to as "jump instruction". However, since cache 5 has not stored all instructions/data relating to the program there is a chance that an instruction/data following immediately or later in time after that jump instruction is not present in cache 5. So, if processor 1 after having executed the instruction after the jump instruction would again try to retrieve a next instruction from cache 5 there would be a chance that a cache miss occurs, forcing the processor 1 to retrieve the next instruction from memory 3. This would result in a waiting time.

In accordance with the invention, this is solved by the cache processor 2 starting a new pre-fetch operation at time tjᵤₘₚ. This new pre-fetch operation is as follows. Assume that the instruction/data retrieved by processor 1 from cache 5 at tⱼᵤₘₚ is stored in cache 5 at address(n) (1 ≤ n ≤ N). Then, processor 1 has executed all instructions/data stored at this address(n), i.e., as stored in m words of cached instructions/data. At the next time of retrieving an instruction/data from cache 5, the processor 1 needs the instruction/data from cache 5 that is also stored in a memory location in memory 3 associated with address(n) + "m words" in cache 5. To be sure that this instruction/data is present in cache 5 at the time processor 1 wishes to retrieve this from cache 5, cache processor 2 executes this new pre-fetch operation such that this instruction/data is read from memory 3 at time tⱼᵤₘₚ. To be able to start this new pre-fetch operation, on time tⱼᵤₘₚ the processor 1 sends a jump signal to cache processor 2 indicating that this jump instruction was executed by processor 1.

Figure 3a indicates that at t6, the instruction/data associated with address(n) + "m words" in cache 5 is available to cache 5 from memory 3.

This new pre-fetch operation is executed always, no matter whether this instruction/data is already present in cache 5 or not. So, cache processor 2 does not check whether an instruction/data to be executed after an instruction/data to be executed after a jump instruction is present or not in cache 5. It simply directly starts reading next instructions/data from memory 3. This new pre-fetch operation may relate to several addresses in cache 5. In an embodiment, instructions/data relating to a predetermined number of addresses in cache 5 may be pre-fetched from memory 3 in this way. In an other embodiment, the new pre-fetch operation may relate to reading so many instructions/data from memory 3 to cache 5 as necessary to fill a predetermined memory space in cache 5.

In that way, when processor 1 tries to retrieve a next instruction/data from cache 5 after having executed an instruction/data after a jump instruction, it is almost certain that this next instruction/data is already available in cache 5. So no time needs to be wasted for a possible next fetch operation.

In an embodiment, the instructions/data as read from memory 3 on time tⱼᵤₘₚ are not stored in cache 5 but simply made available to processor 1 such that processor 1 can process the instructions/data when it is ready to do so.

Figure 3b shows an alternative embodiment. Until time tⱼᵤₘₚ everything is the same as in the embodiment according to figure 3a.. However, now, at time tⱼᵤₘₚ after the jump instruction has been executed, a cache miss occurs. I.e., the next instruction/data to be executed by processor 1 cannot be found by cache processor 2 in cache 5. Then, cache processor 2 starts a fetch operation to retrieve the required instruction/data from memory 3. This takes again a time period t_{fetch}. At t7, the instruction/data as read from memory 3 is stored in cache 5. On time t8, this instruction/data will be transferred to processor 1 for further execution. At that time t8, cache processor 2 starts a new pre-fetch action on an address in memory 3 associated with address(n) + "m words" in cache 5. Again this pre-fetch operation may relate to instructions/data for one or more addresses in cache 5, as was the case on t2.

As a further optional feature of the invention, the instructions/data necessary for the processor 1 to continue processing after having executed the jump instruction, once being stored in cache 5, remains stored in cache 5, and is not overwritten by other data as long as the program is running on processor 1. This is an advantageous embodiment in programs containing loops where a same jump instruction is executed more than once by processor 1. Then, the next instruction/data after the jump instruction is always available, and the pre-fetch method of figure 3a always applies. The pre-fetch method of figure 3b does not need to be applied anymore, then.

For the method according to the invention to work properly, it is advantageous that the throughput from memory 3 to cache 5 is equal or more than the throughput from cache 5 to processor 1.

In a further embodiment, instructions/data relating to one or more addresses in memory 3 are transferred to cache 3 and are not overwritten when they relate to portion of a program that are frequently used during executing the program. These portions may e.g. relate to inner loops of nested loops in a DSP-like (DSP = digital signal processor) algorithm, which inner loops need to be executed several times. Then, only instructions/data relating to other portions of the program are read from memory 3 in accordance with the pre-fetch method as explained above and stored in a separate portion of cache 5.

Using the pre-fetch method as explained above, may save a lot of cache space while still having a high chance that next necessary instructions/data can be read from cache 5. Since no entire programs need be stored in cache 5, the required cache magnitude may be an order of magnitude lower than is required for traditional caches, e.g., an order of 2 lower, which saves costs.

It is observed that, while processor 1 is shown to be a separate unit from cache 5 that contains its own cache processor 2, they may be integrated on a single chip. The invention is not restricted as to where the intelligence to perform the individual steps of the pre-fetch method is located.

In the annexed claims, the term "block of data" will be used. This term refers to a group of one or more instructions together with data relating to these instructions. The group may be m words wide as shown in figure 1.

## Claims

1. Method of executing a program by a processor (1), including
• retrieving blocks of data comprising consecutive instructions relating to the computer program and data associated with the instructions from at least one of a cache (5) and a memory (3) by said processor (1);
• executing a jump instruction which identifies a specific address in said cache from which a first block of data is to be retrieved; and
• sending a jump signal to a cache processor indicating that said jump instruction has been executed by said processor;
• looking in said cache (5) whether said first block of data is stored in said cache (5);
• if said first block of data is identified to be present in said cache (5), retrieving said first block of data from said cache (5) to be executed by said processor (1) and, responsive to said jump signal, immediately starting a pre-fetch action including reading at least a second block of data from said memory (3), said second block of data being stored in said memory (3) on a memory address in said memory (3) associated with a next instruction to be executed by said processor (1) in accordance with said program;
• if said first block of data is identified not to be present in said cache (5), starting a fetch operation to read said first block of data from said memory (3) to be executed by said processor (1).

2. Method in accordance with claim 1, wherein, after said pre-fetch action, said second block of data is stored in said cache (5).

3. Method in accordance with claim 1 or 2, wherein said pre-fetch action includes at least reading a plurality of blocks of data from said memory (3), said plurality of blocks of data starting with said second block of data followed by blocks of data stored at consecutive memory addresses next to said memory address.

4. Method in accordance with any of the preceding claims, wherein said first block of data remains in cache (5) after being executed by said processor (1).

5. Method in accordance with any of the preceding claims, wherein said cache (5) stores blocks of data relating to frequently executed loops of a program which blocks of data are not overwritten by any pre-fetched or fetched blocks of data during execution of said program.

6. Computer arrangement comprising a processor (1), a cache (5) connected to said processor (1) and a memory (3) connected to said cache (5), said cache (5) comprising a cache processor (2), said computer arrangement being arranged:
• to retrieve blocks of data comprising consecutive instructions relating to the computer program and data associated with the instructions from at least one of a cache (5) and a memory (3) by said processor (1);
• to execute a jump instruction which identifies a specific address in said cache from which a first block of data is to be retrieved;
• to send a jump signal to said cache processor indicating that said jump instruction has been executed by said processor; and
• to look in said cache (5) whether said first block of data is stored in said cache (5); wherein
• if said first block of data is identified to be present in said cache (5), to retrieve said first block of data from said cache (5) to be executed by said processor (1) and to, responsive to said jump signal, immediately start a pre-fetch action including reading at least a second block of data from said memory (3), said second block of data being stored in said memory (3) on a memory address in said memory (3) associated with a next instruction to be executed by said processor (1) in accordance with said program; and
• if said first block of data is identified not to be present in said cache (5), to start a fetch operation to read said first block of data from said memory (3) to be executed by said processor (1).

7. Computer program product comprising instructions and data causing a computer arrangement with a processor (1), a cache (5) connected to said processor (1) and a memory (3) connected to said cache (5), to perform the method as claimed in any of the claims 1-5 when executed thereon.

8. Data carrier comprising a computer program product as specified in claim 7.

## Patentansprüche

1. Verfahren zur Ausführung eines Programms durch ein Prozessor (1), beinhaltend:
- Abrufen von Datenblöcken, die aufeinanderfolgende das Computerprogramm betreffende Befehle aufweisen, und von mit den Befehlen assoziierten Daten von einem Cache (5) und/oder einem Speicher (3) durch den Prozessor (1),
- Ausführen eines Sprungbefehls, der eine absolute Adresse in dem Cache angibt, von der ein erster Datenblock abzurufen ist, und
- Senden eines Sprungsignals an einen Cache-Prozessor, das anzeigt, dass der Sprungbefehl durch den Prozessor (1) ausgeführt wurde,
- Suchen in dem Cache (5), ob der erste Datenblock in dem Cache (5) gespeichert ist,
- wenn festgestellt wird, dass der erste Datenblock sich in dem Cache (5) befindet, Abrufen des durch den Prozessor (1) auszuführenden ersten Datenblocks von dem Cache (5) und, in Antwort auf das Sprungsignal, unmittelbares Beginnen einer Vorableseaktion aufweisend ein Lesen wenigstens eines zweiten Datenblocks von dem Speicher (3), wobei der zweite Datenblock in dem Speicher (3) an einer Speicheradresse in dem Speicher (3) gespeichert ist, die mit einem nächsten durch den Prozessor (1) in Übereinstimmung mit dem Programm auszuführenden Befehl assoziiert ist,
- wenn festgestellt wird, dass der erste Datenblock sich nicht in dem Cache (5) befindet, Beginnen einer Leseoperation, um den durch den Prozessor (1) aufzuführenden ersten Datenblock aus dem Speicher (3) auszulesen.

2. Verfahren in Übereinstimmung mit Anspruch 1, wobei nach der Vorableseaktion der zweite Datenblock in dem Cache (5) gespeichert wird.

3. Verfahren in Übereinstimmung mit Anspruch 1 oder 2, wobei die Vorableseaktion wenigstens ein Lesen einer Vielzahl von Datenblöcken aus dem Speicher (3) beinhaltet, wobei die Vielzahl von Datenblöcken mit dem zweiten Datenblock beginnt, gefolgt von Datenblöcken, die an aufeinanderfolgenden Speicheradressen neben der Speicheradresse gespeichert sind.

4. Verfahren in Übereinstimmung mit einem der vorhergehenden Ansprüche, wobei der erste Datenblock nach Ausführung durch den Prozessor (1) in dem Cache (5) verbleibt.

5. Verfahren in Übereinstimmung mit einem der vorhergehenden Ansprüche, wobei der Cache (5) häufig ausgeführte Programmschleifen betreffende Datenblöcke speichert, wobei die Datenblöcke während der Ausführung des Programms nicht durch vorabgelesene oder gelesene Datenblöcke überschrieben werden.

6. Computeranordnung umfassend einen Prozessor (1), einem mit dem Prozessor (1) verbundenen Cache (5), und einen mit dem Cache (5) verbunden Speicher (3), wobei der Cache (5) einen Cacheprozessor (2) aufweist, wobei die Computeranordnung eingerichtet ist,
- Datenblöcke, die aufeinanderfolgende das Computerprogramm betreffende Befehle aufweisen, und mit den Befehlen assoziierte Daten aus einem Cache (5) und/oder einem Speicher (3) durch den Prozessor (1) abzurufen,
- einen Sprungbefehl auszuführen, der eine absolute Adresse in dem Cache (5) angibt, von der ein erster Datenblock abzurufen ist,
- ein Sprungsignal an den Cacheprozessor zu senden, das anzeigt, dass der Sprungbefehl durch den Prozessor ausgeführt wurde, und
- indem Cache (5) zu suchen, ob der erste Datenblock in dem Cache (5) gespeichert ist, wobei
- wenn festgestellt wird, dass der erste Datenblock sich in dem Cache (5) befindet, den ersten von den Prozessor (1) auszuführenden Datenblock von dem Cache (5) abzurufen und, in Antwort auf das Sprungsignal, unmittelbar eine Vorableseaktion zu beginnen, umfassend ein Lesen wenigstens eines zweiten Datenblocks von dem Speicher (3), wobei der zweite Datenblock in dem Speicher (3) an einer Speicheradresse in dem Speicher (3) gespeichert ist, die mit einem nächsten durch den Prozessor (1) in Übereinstimmung mit dem Programm auszuführenden Befehl assoziiert ist, und
- wenn festgestellt wird, dass der erste Datenblock sich nicht in dem Cache (5) befindet, eine Leseoperation zu beginnen, um den durch den Prozessor (1) aufzuführenden ersten Datenblock aus dem Speicher (3) auszulesen.

7. Computerprogrammprodukt, umfassend Instruktionen und Daten, die eine Computeranordnung mit einem Prozessor (1), einem mit dem Prozessor (1) verbundenen Cache (5) und einem mit dem Cache (5) verbundenen Speicher (3) dazu veranlasst, ein Verfahren auszuführen, wie es mit einem der Ansprüche 1 bis 5 beansprucht ist, wenn es darauf ausgeführt wird.

8. Datenträger aufweisend ein Computerprogrammprodukt, wie es in Anspruch 7 angegeben ist.

## Revendications

1. Procédé d'exécution d'un programme par un processeur (1), comprenant :
- l'extraction de blocs de données comprenant des instructions consécutives concernant le programme informatique et de données associées aux instructions à partir d'au moins l'une d'une antémémoire (5) et d'une mémoire (3) par ledit processeur (1) ;
- l'exécution d'une instruction de saut qui identifie une adresse spécifique dans ladite antémémoire à partir de laquelle un premier bloc de données doit être extrait ; et
- l'envoi d'un signal de saut à un processeur d'antémémoire indiquant que ladite instruction de saut a été exécutée par ledit processeur ;
- la détermination dans ladite antémémoire (5) si ledit premier bloc de données est mémorisé dans ladite antémémoire (5) ;
- si ledit premier bloc de données est identifié comme étant présent dans ladite antémémoire (5), l'extraction dudit premier bloc de données à partir de ladite antémémoire (5) à exécuter par ledit processeur (1) et, en réponse audit signal de saut, le démarrage immédiat d'une action de pré-recherche comprenant la lecture d'au moins un deuxième bloc de données à partir de ladite mémoire (3), ledit deuxième bloc de données étant mémorisé dans ladite mémoire (3) à une adresse de mémoire dans ladite mémoire (3) associée à une instruction suivante à exécuter par ledit processeur (1) en fonction dudit programme ;
- si ledit premier bloc de données est identifié comme n'étant pas présent dans ladite antémémoire (5), le démarrage d'une opération de recherche pour lire ledit premier bloc de données à partir de ladite mémoire (3) à exécuter par ledit processeur (1).

2. Procédé selon la revendication 1, dans lequel, après ladite action de pré-recherche, ledit deuxième bloc de données est mémorisé dans ladite antémémoire (5).

3. Procédé selon la revendication 1 ou 2, dans lequel ladite action de pré-recherche comprend au moins la lecture d'une pluralité de blocs de données à partir de ladite mémoire (3), ladite pluralité de blocs de données commençant audit deuxième bloc de données suivi de blocs de données mémorisés à des adresses de mémoire consécutives à la suite de ladite adresse de mémoire.

4. Procédé selon l'une quelconque des revendications précédentes, dans lequel ledit premier bloc de données reste dans l'antémémoire (5) après avoir été exécuté par ledit processeur (1).

5. Procédé selon l'une quelconque des revendications précédentes, dans lequel ladite antémémoire (5) mémorise des blocs de données concernant des boucles fréquemment exécutées d'un programme, lesquels blocs de données ne sont pas écrasés par des blocs de données pré-recherchés ou recherchés au cours de l'exécution dudit programme.

6. Agencement informatique comprenant un processeur (1), une antémémoire (5) reliée audit processeur (1) et une mémoire (3) reliée à ladite antémémoire (5), ladite antémémoire (5) comprenant un processeur d'antémémoire (2), ledit agencement informatique étant agencé pour effectuer :
- l'extraction de blocs de données comprenant des instructions consécutives concernant le programme informatique et de données associées aux instructions à partir d'au moins l'une d'une antémémoire (5) et d'une mémoire (3) par ledit processeur (1) ;
- l'exécution d'une instruction de saut qui identifie une adresse spécifique dans ladite antémémoire à partir de laquelle un premier bloc de données doit être extrait ;
- l'envoi d'un signal de saut audit processeur d'antémémoire indiquant que ladite instruction de saut a été exécutée par ledit processeur ; et
- la détermination dans ladite antémémoire (5) si ledit premier bloc de données est mémorisé dans ladite antémémoire (5) ; dans lequel
- si ledit premier bloc de données est identifié comme étant présent dans ladite antémémoire (5), l'extraction dudit premier bloc de données à partir de ladite antémémoire (5) à exécuter par ledit processeur (1) et, en réponse audit signal de saut, le démarrage immédiat d'une action de pré-recherche comprenant la lecture d'au moins un deuxième bloc de données à partir de ladite mémoire (3), ledit deuxième bloc de données étant mémorisé dans ladite mémoire (3) à une adresse de mémoire dans ladite mémoire (3) associée à une instruction suivante à exécuter par ledit processeur (1) en fonction dudit programme ; et
- si ledit premier bloc de données est identifié comme n'étant pas présent dans ladite antémémoire (5), le démarrage d'une opération de recherche pour lire ledit premier bloc de données à partir de ladite mémoire (3) à exécuter par ledit processeur (1).

7. Produit de programme informatique comprenant des instructions et des données amenant un agencement informatique comportant un processeur (1), une antémémoire (5) reliée audit processeur (1) et une mémoire (3) reliée à ladite antémémoire (5) à effectuer le procédé selon l'une quelconque des revendications 1 à 5 lorsqu'il est exécuté sur celui-ci.

8. Support de données comprenant un produit de programme informatique selon la revendication 7.
